# EUROPEAN PATENT SPECIFICATION

(11) **EP 3 640 514 B1**
(45) Date of publication and mention of the grant of the patent: **07.06.2023**
(21) Application number: 18201594.1
(22) Date of filing: 19.10.2018
(51) Int. Cl.: F16L 27/08, F16L 39/06, B66C 1/68, B66C 13/14, A01G 23/00, A01G 23/08, E02F 9/00, E02F 9/22

(54) **HYDRAULIC JOINT AND HYDRAULIC BOOM CRANE ASSEMBLY WITH A HYDRAULIC JOINT**
HYDRAULISCHE VERBINDUNG UND HYDRAULISCHE AUSLEGERKRANANORDNUNG MIT EINER HYDRAULISCHEN VERBINDUNG
RACCORD HYDRAULIQUE ET ENSEMBLE DE GRUE À FLÈCHE HYDRAULIQUE AVEC UN RACCORD HYDRAULIQUE

(43) Date of publication of application: 22.04.2020
(73) Proprietor: Deere & Company, Moline, IL 61265 (US)
(72) Inventor: Sahoo, Ghanashyam, 68163 Mannheim (DE); Jokinen, Jarkko, 68163 Mannheim (DE); Chouthai, Shreyas, 68163 Mannheim (DE)
(74) Representative: Lavall, Christian Henner

(56) References cited:
- EP-A1- 1 889 808
- US-A- 2 481 404
- US-A- 5 829 479
- US-A1- 2016 122 162
- "OLHYDRAULIK UND PNEUMATIK, PASSAGE", O & P - OELHYDRAULIK UND PNEUMATIK: ZEITSCHRIFT FUER FLUIDTECHNIK, AKTORIK, STEUERELEKTRONIK UND SENSORIK, VEREINIGTE FACHVERLAGE GMBH, DE, vol. 11, no. 6, 1 January 1967 (1967-01-01), page 230, XP002228421, ISSN: 0341-2660

## Description

The invention concerns a hydraulic boom crane assembly with a hydraulic joint.

Hydraulic power is used in all kind of machines to enable work tools to function. Such tools normally require a high provision of hydraulic pressure and are used in heavy work environments, such as excavators, wheel loaders, cranes, forestry machines.

An exemplary use is a grapple tool used to grab and handle items on construction sites or in forest applications. In such applications, a grapple is rotated in order to align the pincers with the placed items by a rotator tool. Next, the grapple is lowered towards the item and opened-closed to grab the item. The item is moved with the boom crane to another location and the process is repeated.

The rotator tool is connected to and controlled by hydraulic pressure and utilizes hydraulic connections and flexible hydraulic hoses. The open-close operation may also be controlled by hydraulic pressure. Rotation of the grapple by the rotator and the changing angle of the grapple in regard to the boom crane is leading to a constant load on the flexible hydraulic hoses connected to the rotator and the grapple. The hoses are continuously stretched and twisted resulting in a reduced service life of the hoses, reduced productivity of the machine and increased costs.

US 7735530 B1 shows a rotary dangle head having continuous rotation including a rotator, a continuous rotary hydraulic union and a dangle head. The rotator includes a support base, a slewing ring, a mounting plate and a ring rotator. The slewing ring includes an outer bearing ring and an inner bearing ring. The dangle head includes a retention bracket and a processing head. The processing head is pivotally retained by the retention bracket. The outer bearing ring is attached to a bottom of the support base. The inner bearing ring is attached to a top of the mounting plate. The ring rotator drives the outer bearing ring. The retention plate is attached to a bottom of the mounting plate. The continuous rotary hydraulic union is connected to hydraulically driven components mounted to the processing head.

EP 1889808 A1 discloses a crane arm that has a fixing device (2) with the crane arm sided swivel joint (4) and a tool sided swivel joint (5) spaced along a vertical axis according to a type of a cardan joint spaced along a vertical axis (x). Hose lines are guided to connections at a rotator arranged between a tool and the tool sided swivel joint. The connections are horizontally directed away from the vertical axis. The crane arm sided swivel joint exhibits two spaced pivot bearings along its rotational axis, and the hose lines run from the crane arm to the connections between the pivot bearings.

US 2481404A1 shows a rotating fitting for the conveyance of liquids, comprising a stem member having a cylindrical external surface portion, a hollow portion within said stem member having an axial opening and a substantially radial opening, a pair of lateral circumferential grooves entirely located in said cylindrical external surface portion of said stem member, a pair of packing rings of resilient material within said lateral grooves, a sleeve member having a cylindrical internal surface portion cooperating with and fitting over said cylindrical external surface portion of said stem member so as to permit relative rotation between said stem member and said sleeve member, a central circumferential groove between said lateral circumferential grooves and communicating with said substantially radial opening of said stem member, and an opening in said sleeve member communicating with said central circumferential groove, said packing rings being slightly wider and slightly thinner than the respective depth and width of said lateral grooves and being so proportioned as to provide a substantially liquid tight seal substantially preventing leakage between said stem member and said sleeve member and at the same time a minimum of frictional resistance against relative rotation of said stem member and said sleeve member.

The continuous rotary hydraulic union includes a stationary portion and a rotary portion. An inlet passage and an outlet passage are formed in the stationary portion. The inlet and outlet passages communicate with a plurality of hydraulic fittings threaded into hydraulic passages formed in the rotary portion. The plurality of hydraulic fittings are connected to hydraulic hoses for powering hydraulically driven components, such as the at least one actuator, a roller motor and a chain saw. The flow of hydraulic fluid to the hydraulically driven components is controlled by a plurality of electrically operated valves.

It is an object of the present invention to allow the use of hydraulic hoses in a working machine, which have an extended service life when compared to state of the art. Further, the wear on such hydraulic hoses is to be minimized as well as the forces acting on the respective hoses. Additionally, the serviceability is to be improved.

The object is solved by the inventions according to the independent claims.

A first aspect of the invention is a hydraulic boom crane assembly according to claim 1 for a working machine with multiple sections movable relative to each other, It comprises a hydraulic tool attachment movably connected to one end of the boom crane, a hydraulic joint with a rotation axis with at least two joint sections connected to each other. The joint sections are movable relative to each other, and are hydraulically connected to each other, whereas the joint sections are rotatable around the rotation axis, and the joint sections each have at least one hydraulic connector able to connect to a hydraulic line. Hydraulic pressure is transferable from one hydraulic connector on one joint section to another hydraulic connector on another joint section, wherein the hydraulic connectors are oriented 90° to the rotation axis, wherein the hydraulic joint is mounted between two movable sections of the boom crane or between the boom crane and the tool attachment.

The boom crane assembly is made of sections, which are relatively movable to each other. Such a movement can be a rotation, a slide movement, or an angled movement of the single sections. When hydraulic hoses, which are positioned on that sections follow the movement of the sections, the hoses experience bending or twisting which reduces their service time. The hydraulic joint enables the hydraulic boom assembly to fix the hoses on the boom sections and minimize bending or twisting. The movement of the boom sections is handled by the hydraulic joint mounted between the boom sections, so that the hoses are connected at the end of a boom section to the hydraulic connector of the hydraulic joint. Such a boom crane reduces the stress on the hydraulic hoses due to bending or twisting. Also, and relative movement of the hoses in reduced, such as a rubbing movement of the hoses on the boom sections.

In another embodiment, the hydraulic joints are stacked in a direction parallel to the rotation axis.

This enables the use of more than two connections. The hydraulic joints can be arranges in a space saving manner in parts of the boom section connections, so that multiple hydraulic lines and hoses can be used inside a boom crane assembly.

In a further embodiment, the hydraulic connectors are movable relative to each other in a plane perpendicular to the rotation axis.

In boom cranes used in earth moving machines or forest machines, the boom crane usually has hinges which enable angled or rotational movement of the boom sections. Thus, the hydraulic hoses can follow such boom crane movement and do not have to follow the boom sections movement during the working process.

By another embodiment, the hydraulic connectors are placed in a plane perpendicular to the rotation axis and line up on one line or parallel to each other.

This allows connecting the hoses to the hydraulic connectors in an efficient way. The hoses are oriented along the boom sections. This allows a space-efficient packaging of the hoses on the boom crane. In addition, the hoses are place near the surface of the boom sections, so that they are protected from being trapped on obstacles or damage.

Another aspect of the invention is the use according to claim 4 of a hydraulic joint in a hydraulic boom crane assembly for a working machine, comprising a hydraulic tool attachment movably connected to one end of the boom crane, a hydraulic joint with a rotation axis, further comprising
at least two joint sections connected to each other, which are movable relative to each other, and which are hydraulically connected to each other, whereas the joint sections are rotatable around the rotation axis, and the joint sections each have at least one hydraulic connector, connect to a hydraulic line, so that hydraulic pressure is transferable from one hydraulic connector on one joint section to another hydraulic connector on another joint section
wherein the hydraulic connectors are oriented 90° to the rotation axis.

The use of the hydraulic joint enables a compact boom crane design, where the hoses have a longer service life and are not under the influence of stressing forces due to movement of the boom crane. Maintenance is improved and the productivity is increased as the lifetime of the hoses and the function of the boom crane is extended.

The invention and its embodiments is further described in the following figures, such as
Fig. 1, which shows a forest working machine;
Fig. 2, which shows another type of a forest working machine;
Fig. 3, which shows a hydraulic joint;
Fig. 4, which shows an assembly with a hydraulic joint;
Fig. 5, which shows another assembly with a hydraulic joint.

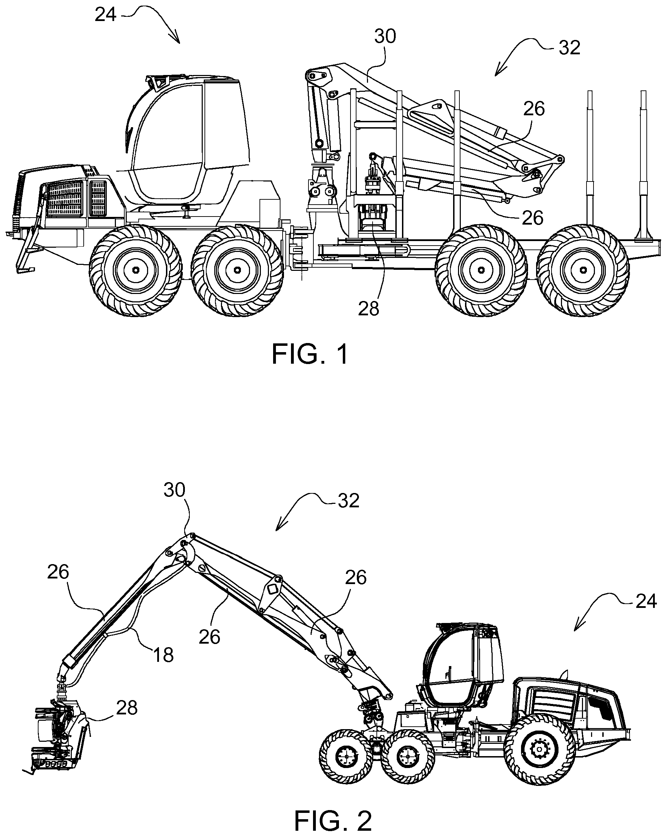

Figure 1 depicts a forwarder vehicle 24 for forestry related tasks. The vehicle 24 comprises a driver cabin and a load space in the rear part of the vehicle 24. The machine is used to load logs on the load space and transport these out of the cutting area of the forest. To load the logs onto the load space the vehicle 24 comprises a hydraulic boom crane assembly 32 next to the load space. The boom crane assembly 32 has a boom crane 30 and a hydraulic boom attachment 28 in the form of a grapple. The hydraulic boom attachment 28 can also have different forms and functions.

The boom crane assembly 32 has multiple sections 26, which are attached movably to each other, so that the sections 26 can rotate or extend in relation to the working vehicle 24. The hydraulic boom attachment 28 is thus able to move in multiple directions to reach the logs in the working area of the hydraulic boom assembly 32.

Figure 2 shows a harvester working machine 24, which cuts trees and processes them into logs of a specific length. The working machine 24 also comprises a hydraulic boom assembly 32 with multiple sections 26 of its boom crane 30. Each section 26 also comprises hydraulic lines 18 to supply hydraulic pressure and hydraulic flow to each sections 26 and to a hydraulic tool attachment 28. The boom crane assembly 32 is rotatable around its base on the working machine 24 and its sections 26 are held by hinges which allow rotation. Further, at least the final section 26 holding the hydraulic tool attachment 28 is also extendable to increase the working radius. The hydraulic tool attachment 28 is a harvester head, which may have hydraulically driven feeding wheels, a chain saw and knives, which can be hydraulically actuated. The numerous hydraulic components demand each hydraulic lines 18 which have to be routed along the hydraulic boom crane assembly 32 and across the several connections of the multiple sections 26 of the boom crane 30.

As such, the hydraulic lines 18 undergo bending movement with every movement of the boom crane 30, apart from a torsion movement when the hydraulic tool attachment 28 is rotated.

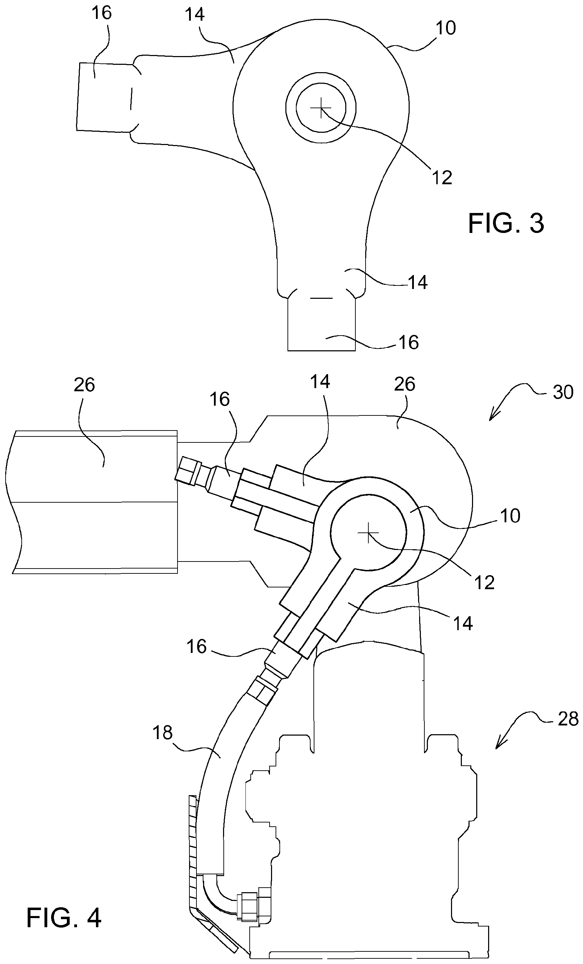

Figure 3 depicts an embodiment of the hydraulic joint 10. It consists of at least two joint sections 14, which are joined to each other in an area around the rotation axis 12. The connection of the two joint sections 14 can have the form of a through pin, so that the pin of one joint sections 14 enters in an opening of the other joint sections 14. The two joint sections 14 are rotatable in relation to each other around the rotation axis 12. Each joint section 14 has at least one hydraulic connector 16, where hydraulic lines 18 can be attached. Hydraulic pressure and flow can be transmitted from one joint section 14 through the connection to the other joint sections 14 and the attached hydraulic line 18. The rotational movement is executed by the hydraulic joint 10 whereas the connected hydraulic hoses can each remain in an unbended state.

Figure 4 shows a tip end of a boom crane 30. The tip end shows two sections 26, whereas the end section is inserted into the other section 26 so that the two sections are moveable in a longitudinal direction. The end section carries a hydraulic tool attachment 28, which is supported by a hinge which has a rotation axis 12. The hydraulic joint 10 is attached to the end section at the exact location of the hinge, so that the axis of rotation of the hinge is identical to the rotation axis 12 of the hydraulic joint 10. One joint section 14 is oriented towards the boom crane 30 with its hydraulic connector 16 being oriented in the same direction. The other joint section 14 is pointed towards the hydraulic tool attachment 28 with its hydraulic connector 16 also pointed to the hydraulic tool attachment 28. Hydraulic lines 18, transferring hydraulic pressure and flow are connected to the hydraulic connectors 16 and to the working machine 24 or to the hydraulic boom crane assembly 32. In addition, hydraulic lines 18 are connected between the hydraulic joint 10 and the hydraulic tool attachment 28.

If the hydraulic tool attachment 28 starts to swing or oscillate, the hydraulic lines 18 are fixed in their current positions and move without any bending or stretching forces. This allows the hydraulic lines 18 to have an extended service life. Further, the hydraulic lines 18 are mainly maintained in a straight routing so that maintenance work can be done in an easy manner. When replacing the hydraulic lines 18, due to their improved routing, there is no tension, so that the work load of maintenance personal is lowered. In addition, new hoses do not need to be placed in a complicated fashion, reducing the work load further.

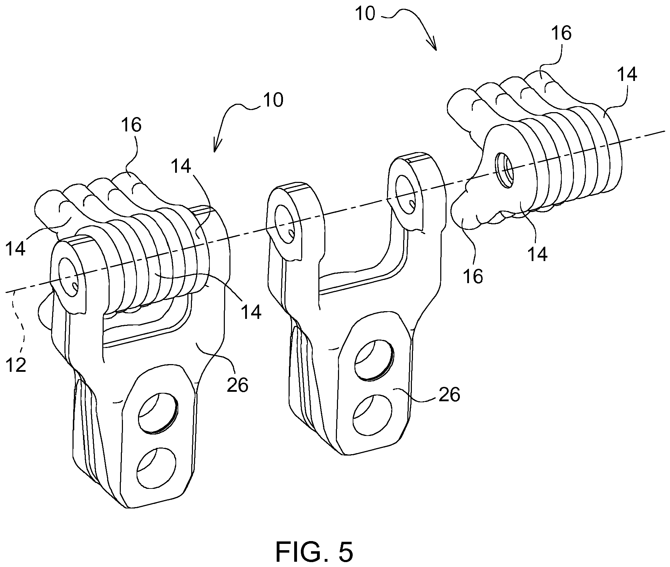

Figure 5 depicts another embodiment of the invention. In a part of the multiple sections 26 of a boom crane 30 the hydraulic joint 10 can be used to improve the packaging of the boom crane assembly 32. The free space of the section 26 is used to place the hydraulic joint 10 exactly at the same rotation axis 12 of the section 26. The hydraulic joint 10 can be staggered so that multiple hydraulic connections can be routed through the hydraulic joint 10, such that the number of the joint sections 14 is increased. This packaging improves the routing of the hydraulic lines 18 in that the rubber hoses of the hydraulic lines 18 do not have to be placed between the sections but can just be connected to the hydraulic joint 10. Further, the movement of the multiple sections 26 is improved, as the counteracting bending torque of the multiple hydraulic lines 18 is omitted. Thus, also the working machine's performance and manoeuvrability is improved by the invention.

## Claims

1. Hydraulic boom crane assembly (32) for a working machine (24) with multiple sections (26) movable relative to each other, comprising:
a hydraulic tool attachment (28) movably connected to one end of the boom crane (30), a hydraulic joint (10) with a rotation axis (12), further comprising
at least two joint sections (14) connected to each other,
which are movable relative to each other, and
which are hydraulically connected to each other,
whereas the joint sections (14) are rotatable around the rotation axis (12), and
the joint sections (14) each have at least one hydraulic connector (16), able to connect to a hydraulic line (18),
so that hydraulic pressure is transferable from one hydraulic connector (16) on one joint section (14) to another hydraulic connector (16) on another joint section (14),
wherein the hydraulic connectors (16) are oriented 90° to the rotation axis (12)
wherein the hydraulic joint (10) is mounted between two movable sections (26) of the boom crane (30) or between the boom crane (30) and the tool attachment (28) wherein the hydraulic connectors (16) are movable relative to each other in a plane perpendicular to the rotation axis (12).

2. Hydraulic boom crane assembly (32) according to claim 1, wherein the hydraulic joints (10) are stacked in a direction parallel to the rotation axis (12).

3. Hydraulic boom crane assembly (32) according to any of the claims 1 to 2, wherein the hydraulic connectors (16) are placed in a plane perpendicular to the rotation axis (12) and line up on one line or parallel to each other.

4. Use of a hydraulic joint (10) in a hydraulic boom crane assembly (32) for a working machine (24), the hydraulic boom crane assembly (32) comprising:
a hydraulic tool attachment (28) movably connected to one end of the boom crane (30), the hydraulic joint (10) with a rotation axis (12), further comprising at least two joint sections (14) connected to each other,
which are movable relative to each other, and
which are hydraulically connected to each other,
whereas the joint sections (14) are rotatable around the rotation axis (12), and
the joint sections (14) each have at least one hydraulic connector (16), connect to a hydraulic line (18),
so that hydraulic pressure is transferable from one hydraulic connector (16) on one joint section (14) to another hydraulic connector (16) on another joint section (14) wherein the hydraulic connectors (16) are oriented 90° to the rotation axis (12).

## Patentansprüche

1. Hydraulische Auslegerkrananordnung (32) für eine Arbeitsmaschine (24) mit mehreren Abschnitten (26), die bezüglich einander beweglich sind, umfassend:
eine hydraulische Werkzeugbefestigung (28), die beweglich mit einem Ende des Auslegerkrans (30) verbunden ist,
ein hydraulisches Gelenk (10) mit einer Rotationsachse (12), ferner umfassend
mindestens zwei Gelenkabschnitte (14), die miteinander verbunden sind,
die bezüglich einander beweglich sind und
die hydraulisch miteinander verbunden sind,
während die Gelenkabschnitte (14) um die Rotationsachse (12) drehbar sind und
die Gelenkabschnitte (14) jeweils mindestens einen hydraulischen Verbinder (16) haben, der mit einer hydraulischen Leitung (18) verbunden werden kann,
so dass hydraulischer Druck von einem hydraulischen Verbinder (16) an einem Gelenkabschnitt (14) an einen anderen hydraulischen Verbinder (16) an einem anderen Gelenkabschnitt (14) übertragbar ist,
wobei die hydraulischen Verbinder (16) 90° zu der Rotationsachse (12) ausgerichtet sind,
wobei das hydraulische Gelenk (10) zwischen zwei beweglichen Abschnitten (26) des Auslegerkrans (30) oder zwischen dem Auslegerkran (30) und der Werkzeugbefestigung (28) montiert ist,
wobei die hydraulischen Verbinder (16) bezüglich einander in einer zu der Rotationsachse (12) senkrechten Ebene beweglich sind.

2. Hydraulische Auslegerkrananordnung (32) nach Anspruch 1, wobei die hydraulischen Gelenke (10) in einer zu der Rotationsachse (12) parallelen Richtung gestapelt sind.

3. Hydraulische Auslegerkrananordnung (32) nach einem der Ansprüche 1 bis 2, wobei die hydraulischen Verbinder (16) in einer zu der Rotationsachse (12) senkrechten Ebene platziert und auf einer Linie oder parallel zueinander ausgerichtet sind.

4. Verwendung eines hydraulischen Gelenks (10) in einer hydraulischen Auslegerkrananordnung (32) für eine Arbeitsmaschine (24), wobei die hydraulische Auslegerkrananordnung (32) Folgendes umfasst:
eine hydraulische Werkzeugbefestigung (28), die beweglich mit einem Ende des Auslegerkrans (30) verbunden ist,
das hydraulische Gelenk (10) mit einer Rotationsachse (12), ferner umfassend
mindestens zwei Gelenkabschnitte (14), die miteinander verbunden sind,
die bezüglich einander beweglich sind und
die hydraulisch miteinander verbunden sind,
während die Gelenkabschnitte (14) um die Rotationsachse (12) drehbar sind und
die Gelenkabschnitte (14) jeweils mindestens einen hydraulischen Verbinder (16) haben, der mit einer hydraulischen Leitung (18) verbunden ist,
so dass hydraulischer Druck von einem hydraulischen Verbinder (16) an einem Gelenkabschnitt (14) an einen anderen hydraulischen Verbinder (16) an einem anderen Gelenkabschnitt (14) übertragbar ist,
wobei die hydraulischen Verbinder (16) 90° zu der Rotationsachse (12) ausgerichtet sind.

## Revendications

1. Ensemble de grue à flèche hydraulique (32) pour une machine de travail (24) à plusieurs sections (26) mobiles les unes par rapport aux autres, comprenant :
un accessoire d'outil hydraulique (28) relié de manière mobile à une extrémité de la grue à flèche (30),
un raccord hydraulique (10) comportant un axe de rotation (12), comprenant en outre
au moins deux sections de raccord (14) reliées les unes aux autres,
qui sont mobiles les uns par rapport aux autres, et
qui sont reliées hydrauliquement les unes aux autres,
tandis que les sections de raccord (14) peuvent tourner autour de l'axe de rotation (12), et
les sections de raccord (14) ont chacune au moins un connecteur hydraulique (16), pouvant être connecté à une conduite hydraulique (18),
de sorte que la pression hydraulique puisse être transférée d'un connecteur hydraulique (16) sur une section de raccord (14) à un autre connecteur hydraulique (16) sur une autre section de raccord (14),
les connecteurs hydrauliques (16) étant orientés à 90° par rapport à l'axe de rotation (12),
le raccord hydraulique (10) étant monté entre deux sections mobiles (26) de la grue à flèche (30) ou entre la grue à flèche (30) et l'accessoire d'outil (28),
les connecteurs hydrauliques (16) étant mobiles l'un par rapport à l'autre dans un plan perpendiculaire à l'axe de rotation (12).

2. Ensemble de grue à flèche hydraulique (32) selon la revendication 1, les raccords hydrauliques (10) étant empilés dans une direction parallèle à l'axe de rotation (12).

3. Ensemble de grue à flèche hydraulique (32) selon l'une des revendications 1 à 2, les connecteurs hydrauliques (16) étant placés dans un plan perpendiculaire à l'axe de rotation (12) et alignés sur une conduite ou parallèles les uns aux autres.

4. Utilisation d'un raccord hydraulique (10) dans un ensemble de grue à flèche hydraulique (32) pour une machine de travail (24), l'ensemble de grue à flèche hydraulique (32) comprenant :
un accessoire d'outil hydraulique (28) relié de manière mobile à une extrémité de la grue à flèche (30),
le raccord hydraulique (10) avec un axe de rotation (12), comprenant en outre
au moins deux sections de raccord (14) reliées les unes aux autres,
qui sont mobiles les uns par rapport aux autres, et
qui sont reliées hydrauliquement les unes aux autres,
tandis que les sections de raccord (14) peuvent tourner autour de l'axe de rotation (12), et
les sections de raccord (14) ont chacune au moins un connecteur hydraulique (16), relié à une conduite hydraulique (18),
de sorte que la pression hydraulique puisse être transférée d'un connecteur hydraulique (16) sur une section de raccord (14) à un autre connecteur hydraulique (16) sur une autre section de raccord (14),
les connecteurs hydrauliques (16) étant orientés à 90° par rapport à l'axe de rotation (12).
